# EUROPEAN PATENT APPLICATION

(11) **EP 0 945 099 A1**
(43) Date of publication of application: **29.09.1999**
(21) Application number: 99101716.1
(22) Date of filing: 10.02.1999
(51) Int. Cl.: A47L 15/42, B01J 49/00, D06F 39/00

(54) **Improved device for preparing brine for use in an electric household appliance**

(30) Priority: 12.02.1998 IT TO980109
(71) Applicant: BITRON S.p.A., 10042 Nichelino (Torino) (IT)
(72) Inventor: Brignone, Enzo, 12025 Frazione Monastero Dronero (Cuneo) (IT)
(74) Representative: Gerbino, Angelo

(57) **Abstract**

The device for the preparation of brine for the regeneration of substances used to reduce the hardness of water supplied to an electric household appliance, in particular, a dishwashing machine, includes a salt container (16) having a water inlet duct (20) connected to the water supply circuit for the electric household appliance and an outlet duct (22) for the brine solution formed in the container (16) after the water has come into contact with the salt. The inlet duct (20) opens into the top of the container (16) and is preferably rigid and a gasket (29) is fitted between it and a rigid outlet duct (27) from a water collection chamber (14).

## Description

The present invention relates to a device for preparing brine for the regeneration of substances used to reduce the hardness of water supplied to a household domestic appliance, in particular, a dishwashing machine.

In more detail, this device includes a container for salt, having a water inlet duct connected to the water supply circuit of the electric household appliance, and an outlet duct for the brine formed in the container as the result of the water coming into contact with the salt.

The object of the present invention is to provide an improved device of the type described above, in which it is automatically ensured that the container will fill with water during the first operating cycle of the dishwashing machine.

This object is achieved by virtue of a device of the type indicated above, characterised in that the said inlet duct opens into the upper portion of the container.

This arrangement of the inlet duct means that when the water circuit of the appliance is first activated, the water fills the container under gravity and forms the regenerating brine.

This therefore has the advantage of avoiding a situation in which the user of the electric household appliance must manually fill the salt container with water, as in prior art devices.

A further object of the present invention is an electric household appliance, in particular a dishwashing machine, including a device of the type described above.

Further advantages and characteristics of the present invention will become clear from the following detailed description, given with reference to the accompanying drawings, and purely by way of non-limitative example, in which:
Figure 1 is a schematic illustration of a part of the hydraulic circuit of a dishwashing machine including a device according to the invention;
Figure 2 illustrates, schematically and on an enlarged scale, a detail of the device of the invention; and
Figure 3 is a schematic illustration of a part of a hydraulic circuit of a dishwashing machine including a further embodiment of the device according to the invention.

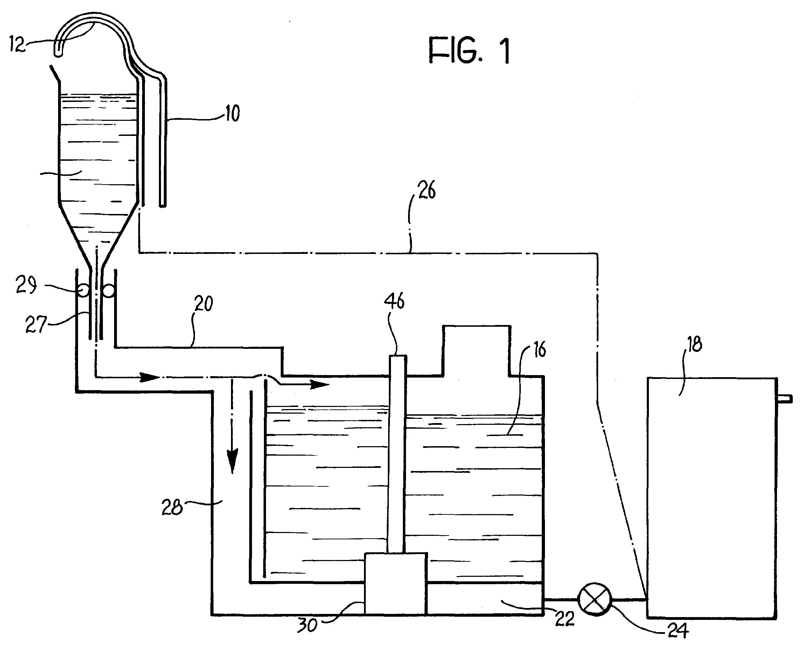

A hydraulic circuit for a dishwashing machine (Figure 1) comprises an inlet duct 10 with an air-break portion 12, a water collection chamber 14, a salt container 16 and a container 18 for substances which reduce the hardness of the water, in particular, ion exchange resins.

A water inlet duct 20 connects the collection chamber 14 to the salt container 16, while an outlet duct 22, on which is positioned a solenoid valve 24, connects the salt container 16 to the container 18. This latter is also connected directly to the inlet duct 10 via a further duct 26.

The inlet duct 20 is rigid and engages a rigid outlet opening 27 of the container 14 with one of its ends. A gasket 29 is interposed between this end and the opening 27.

The other end of the inlet duct 20 opens into the upper portion of the container 16. A by-pass duct 28 branches from the inlet duct 20, before this latter opens into the container 16, and joins the outlet duct 22.

Apparatus 30 for controlling the ratio between the quantity of water flowing in the by-pass duct 28 and the quantity of brine is connected downstream of the salt container 16.

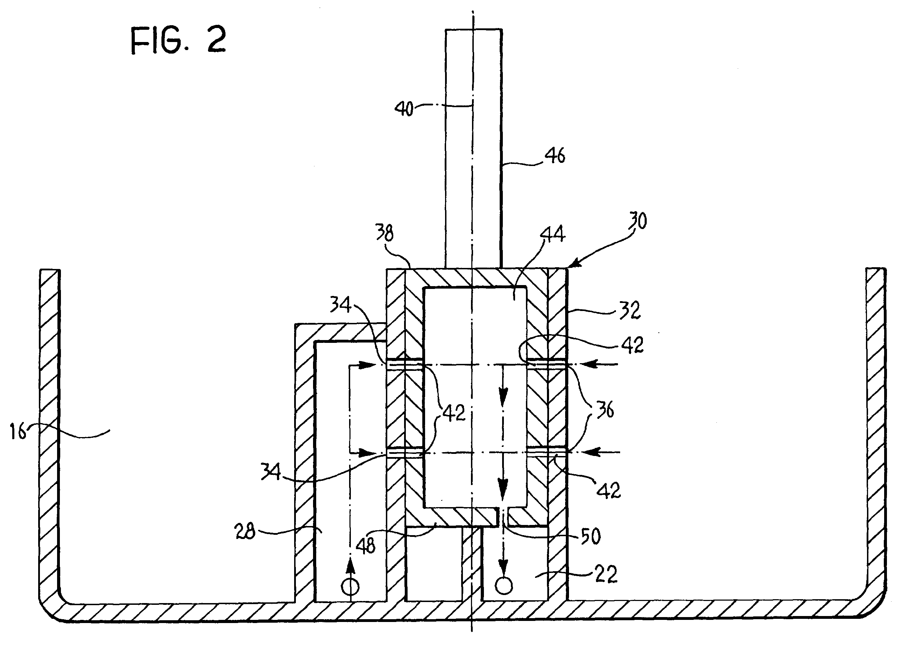

This apparatus 30 includes (Figure 2) a sleeve 32 located vertically within the container 16 and having, in a first section of its side wall, at least one and preferably two first slot-like apertures 34 in communication with the bypass duct 28 and, in a second section of its side wall, at least one and preferably two second slot-like apertures 36 in communication with the inside of the container 16.

A tubular element 38 is located coaxially and with form engagement within the sleeve 32, which element is freely rotatable about its axis 40 and has lateral holes 42 in its walls, each of which, following the rotation of the element 38, locates in correspondence with a respective aperture 34, 36 so as selectively to put an internal cavity 44 of the tubular element 38 in communication with the interior of the container 16 and the by-pass duct 28. A rod 46 projects from the top of the element 38, and is used to control the rotation.

Furthermore, the internal cavity 44 of the element 38 is closed at its base by a plate 48 in which is formed an aperture 50 which communicates with the outlet duct 22.

The device described above operates as follows.

Water flows along the inlet duct 10 and most of it is supplied to the container 18 via the duct 26, where it is decalcified so that it can be used in the washing operations of the dishwashing machine without causing damaging deposits.

A small proportion of the water arriving through the inlet duct 10 falls into the collection chamber 14 passing through the air-break portion 12, from where, via the inlet duct 20, it is directed into the upper portion of the salt container 16. In this way, the water fills the container under gravity, forming a brine solution therein.

On the other hand, some of the water flowing in the inlet duct 20 flows into the by-pass duct 28 without entering the salt container 16, and then mixes in the apparatus 30 with the brine formed in the container 16.

The required salt content of the solution produced by this mixing is obtained by appropriately controlling the ratio between the volume of water flowing through the by-pass duct 28 and the volume of solution leaving the container 16.

This control is achieved by rotating the tubular element 38 within the sleeve 32 so as to bring each slot-like aperture 34, 36 into correspondence, or not, with the associated hole 42. In this way, pure water from the first apertures 34 and brine from the second apertures 36 can flow into the cavity 44 in variable proportions.

The solution that forms in the cavity 44 then flows into the outlet duct 22 via the aperture 50 and, if the solenoid valve 24 is open, enters the container 18 so as to regenerate, in known way, the resins contained therein.

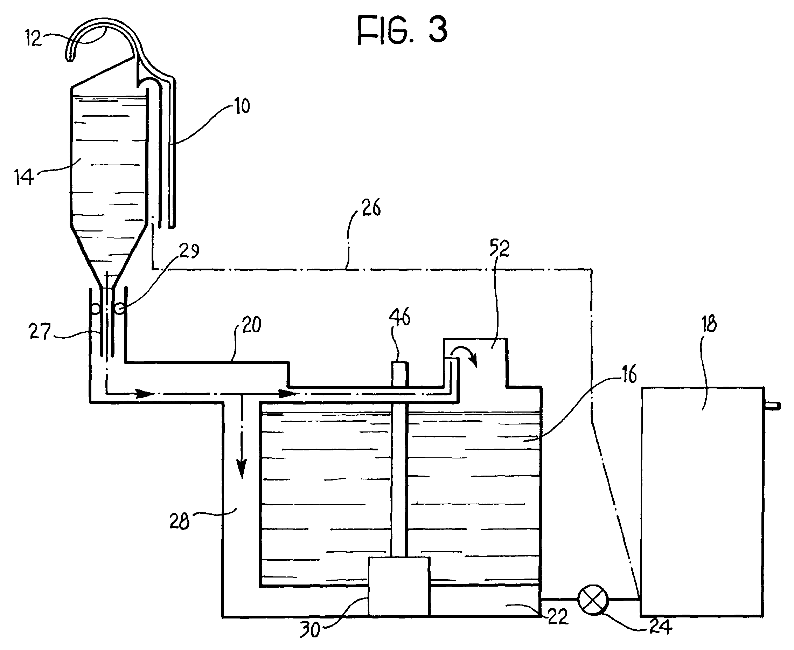

Figure 3 illustrates a further embodiment of the invention. In this figure, parts that are the same as or equivalent to those illustrated in the preceding figures are referred to using the same reference numerals and are not further described.

In this case, the inlet duct 20 opens into a portion of the container 16 shaped in the form of a neck 52, through which the salt can be introduced. The risk of the brine formed in the container 16 being able to rise up through the inlet duct 20 into the collection chamber 14 is therefore avoided.

Furthermore, the inlet duct 10 does not have an air-break portion, but opens directly into the collection chamber 14 from which the duct 26 leading to the container 18 containing the ion-exchange resins leaves.

Naturally, it is understood that, the principle of the invention remaining the same, the details of construction and the embodiments can be widely varied with respect to that described and illustrated in the drawings, without by this departing from the ambit of the present invention. In particular, it is possible to provide a required number of apertures in the sleeve 32 and corresponding holes in the tubular element 38 as well as varying their shape and arrangement as much as is necessary to obtain the required control.

## Claims

1. A device for preparing brine for the regeneration of substances used to reduce the hardness of water supplied to an electric household appliance, in particular, a dishwashing machine, including a salt container (16) provided with a water inlet duct (20) connected to the water supply circuit of the electric household appliance and an outlet duct (22) for the brine formed in the container (16) when the salt comes into contact with the water,
the said device being characterised in that the said inlet duct (20) opens into the upper part of the container (16).

2. A device according to Claim 1, characterised in that the said inlet duct (20) is rigid and is fitted, with an interposed gasket (29), onto a rigid outlet opening (27) of a water collection chamber (14).

3. A device according to any preceding claim, characterised in that the said inlet duct (20) opens into a portion of the container (6) that is shaped as a neck (52), through which the salt is introduced.

4. A device according to any preceding claim, characterised in that a by-pass duct (28) leads from the said inlet duct (20) before this latter opens into the container (16) and joins the outlet duct (22) whereby the water flowing in the by-pass duct (28) mixes with the brine formed in the container (16).

5. A device according to Claim 4, characterised in that a device (30) is connected downstream of the container (16) for controlling the ratio between the volume of water flowing through the by-pass duct (28) and the volume of brine leaving the container (16).

6. A device according to Claim 5, characterised in that the said device (30) includes a sleeve (32) located vertically within the container (16) and having, in a first part of its side wall, at least one first slot-like aperture (34) in communication with the by-pass duct (28) and, in a second part of its side wall, at least one second slot-like aperture (36) in communication with the interior of the container (16), a tubular element (38) being located coaxially within the sleeve (32), which element is freely rotatable about its axis (40) and has holes (42) in its side wall, each of which, following rotation of the element (38), locates in correspondence with an associated aperture (34, 36) so as to put an internal cavity (44) of the tubular element (38) selectively into communication with the interior of the container (16) and the by-pass duct (28), the said interior cavity (44) being closed at its base by a plate (48) in which is formed an aperture (50) in communication with the outlet duct (22).

7. A device according to Claim 6, characterised in that the said sleeve (32) has two first apertures (34) and two second apertures (36), with which respective holes (42) formed in the side wall of the tubular element (38) are associated.

8. An electric household appliance, in particular a dishwashing machine, including a device according to any preceding claim.
